# EUROPEAN PATENT APPLICATION

(11) **EP 4 822 421 A1**
(43) Date of publication of application: **14.10.2026**
(21) Application number: 24899689.4
(22) Date of filing: 27.11.2024
(51) Int. Cl.: G02B 27/01, G02B 6/00

(54) **DISPLAY DEVICE AND VEHICLE**

(30) Priority: 04.12.2023 CN 202311655074
(71) Applicant: Yinwang Intelligent Technologies Co., Ltd., Shenzhen, Guangdong 518110 (CN)
(72) Inventor: ZHOU, Zhaotao, Shenzhen, Guangdong 518110 (CN); WANG, Xiao, Shenzhen, Guangdong 518110 (CN)
(74) Representative: Henselmann, Alexander Gerhard
(86) International application number: PCT/CN2024/134784
(87) International publication number: WO 2025/119049

(57) **Abstract**

This application provides a display device, which can be used in a head-up display device in a vehicle. The display device includes a projection module, a waveguide in-coupling module, an optical waveguide, and a windshield correction element. The projection module is configured to project image light to the waveguide in-coupling module. The waveguide in-coupling module is configured to: couple the image light from the projection module into the optical waveguide, and compensate for a chromatic aberration value caused by the windshield correction element. The optical waveguide is configured to emit the image light from the waveguide in-coupling module to the windshield correction element. The windshield correction element is configured to: adjust a transmission angle and/or a transmission direction of the image light from the optical waveguide, and emit the adjusted image light to a windshield. The display device provided in this application can compensate for a chromatic aberration caused by the windshield correction element, thereby improving imaging quality.

## Description

This application claims priority to Chinese Patent Application No. 202311655074.4, filed with the China National Intellectual Property Administration on December 4, 2023 and entitled "DISPLAY DEVICE AND VEHICLE", which is incorporated herein by reference in its entirety.

### TECHNICAL FIELD

This application relates to the field of display technologies and the field of intelligent vehicle driving technologies, and more specifically, to a display device and a vehicle.

### BACKGROUND

Vehicles have become an indispensable vehicle in people's daily life. As a quantity of vehicles increases, traffic accidents occur more frequently. To improve driving safety, head-up displays (head-up displays, HUDs), particularly augmented reality head-up display (augmented reality head-up displays, AR-HUDs), become a popular research direction.

To reduce a size of the HUD, a new type of HUD that uses a waveguide for image light transmission has become a research focus. In a waveguide-based HUD solution, a correction element usually needs to be arranged in a light output direction of the waveguide, to correct image distortion caused by a windshield and other issues. However, it should be noted that if the correction element is a single component, an additional chromatic aberration may be caused to a HUD system, which also deteriorates image quality. If the correction element is a multi-component combination, the size of the HUD system may increase and costs increase.

Therefore, how to use the single element to correct image quality deterioration caused by the windshield and eliminate the chromatic aberration introduced by the single correction element is a problem that needs to be resolved.

### SUMMARY

This application provides a display device and a vehicle. The display device provided in this application has a small size and good imaging quality.

According to a first aspect, an embodiment of this application provides a display device. The display device includes a projection module, a waveguide in-coupling module, an optical waveguide, and a windshield correction element. The projection module is configured to project image light to the waveguide in-coupling module; the waveguide in-coupling module is configured to couple the image light from the projection module into the optical waveguide, and further configured to compensate for a chromatic aberration value caused by the windshield correction element; the optical waveguide is configured to emit the image light from the waveguide in-coupling module to the windshield correction element; and the windshield correction element is configured to: adjust a transmission angle and/or a transmission direction of the image light from the optical waveguide, and emit the adjusted image light to a windshield.

Based on the foregoing solution, the display device provided in this application can compensate for a chromatic aberration caused by the windshield correction element, thereby improving imaging quality and further improving user experience. In addition, in the solutions of this application, the windshield correction element is a single element instead of a combined system, so that a size of the display device can be further reduced.

With reference to the first aspect, in some implementations of the first aspect, the chromatic aberration value Δ*θ*_{*CF*1} caused by the windshield correction element and a chromatic aberration value Δ*θ*_{*CF*2} caused by the waveguide in-coupling module satisfy: *-*3*mrad ≤* (Δ*θ*_{*CF*1}*+*Δ*θ*_{*CF*2}) ≤ 3*mrad ,* where Δ*θ*_{*CF*1} represents an angle deviation between C light and F light corresponding to the windshield correction element at a maximum field of view *θ*, Δ*θ*_{*CF*2} represents an angle deviation between the C light and the F light corresponding to the waveguide in-coupling module at the maximum field of view *θ*, a wavelength of the C light is 656 nm, a wavelength of the F light is 486 nm, mrad denotes a unit of measurement milliradian, and signs of Δ*θ*_{*CF*1} and Δ*θ*_{*CF*2} are opposite.

Based on the foregoing chromatic aberration range, the display device provided in this application has a small system chromatic aberration, so that imaging quality is good.

With reference to the first aspect, in some implementations of the first aspect, a focal power Φ₁ of the windshield and a focal power Φ₂ of the windshield correction element satisfy: -0.5*m*⁻¹ ≤(Φ₁ +Φ₂) ≤ 0.5*m*⁻¹.

Based on the display device provided in this application, the focal power of the windshield correction element can compensate for the focal power of the windshield, so that a focal power range of the system is within a small range, thereby improving imaging quality.

With reference to the first aspect, in some implementations of the first aspect, the chromatic aberration value Δ*θ*_{*CF*1} caused by the windshield correction element and a chromatic aberration value Δ*θ*_{*CF*2} caused by the waveguide in-coupling module satisfy: (Δ*θ*_{*CF*1} *+*Δ*θ*_{*CF*2}) *=* 0.3*mrad .*

With reference to the first aspect, in some implementations of the first aspect, a focal power Φ₁ of the windshield and a focal power Φ₂ of the windshield correction element satisfy: (Φ₁ + Φ₂) = 0.05*m*⁻¹.

With reference to the first aspect, in some implementations of the first aspect, the windshield correction element is a lens whose surface type is an extend polynomial, and the waveguide in-coupling module includes a plurality of lenses.

With reference to the first aspect, in some implementations of the first aspect, the waveguide in-coupling module includes a first lens, a second lens, a third lens, a fourth lens, and a fifth lens that are sequentially arranged in the transmission direction of the image light, and the second lens is a doublet lens.

With reference to the first aspect, in some implementations of the first aspect, the chromatic aberration value Δ*θ*_{*CF*1} caused by the windshield correction element and a chromatic aberration value Δ*θ*_{*CF*2} caused by the waveguide in-coupling module satisfy: (Δ*θ*_{*CF*1} *+*Δ*θ*_{*CF*2}) *= -*0.6*mrad .*

With reference to the first aspect, in some implementations of the first aspect, a focal power Φ₁ of the windshield and a focal power Φ₂ of the windshield correction element satisfy: (Φ₁ + Φ₂) = 0.13*m*⁻¹.

With reference to the first aspect, in some implementations of the first aspect, the windshield correction element is a Fresnel lens, and the waveguide in-coupling module includes a plurality of lenses and at least one reflector.

With reference to the first aspect, in some implementations of the first aspect, the waveguide in-coupling module includes a first lens, a second lens, a first reflector, and a second reflector that are sequentially arranged in the transmission direction of the image light, and the first lens is a doublet lens.

With reference to the first aspect, in some implementations of the first aspect, the chromatic aberration value Δ*θ*_{*CF*1} caused by the windshield correction element and a chromatic aberration value Δ*θ*_{*CF*2} caused by the waveguide in-coupling module satisfy: (Δ*θ*_{*CF*1} *+*Δ*θ*_{*CF*2}) *=*1.8*mrad*.

With reference to the first aspect, in some implementations of the first aspect, a focal power Φ₁ of the windshield and a focal power Φ₂ of the windshield correction element satisfy: (Φ₁ + Φ₂) = 0.4*m*⁻¹.

With reference to the first aspect, in some implementations of the first aspect, the windshield correction element is a transmissive grating, and the waveguide in-coupling module includes a plurality of lenses and a reflective grating.

With reference to the first aspect, in some implementations of the first aspect, the waveguide in-coupling module includes a first lens, a second lens, and the reflective grating that are sequentially arranged in the transmission direction of the image light, and the first lens is a doublet lens.

With reference to the first aspect, in some implementations of the first aspect, the chromatic aberration value Δ*θ*_{*CF*1} caused by the windshield correction element and a chromatic aberration value Δ*θ*_{*CF*2} caused by the waveguide in-coupling module satisfy: (Δ*θ*_{*CF*1} *+*Δ*θ*_{*CF*2}) *=-*1.6*mrad .*

With reference to the first aspect, in some implementations of the first aspect, a focal power Φ₁ of the windshield and a focal power Φ₂ of the windshield correction element satisfy: (Φ₁ *+*Φ₂) *=*-0.07*m*⁻¹.

With reference to the first aspect, in some implementations of the first aspect, the windshield correction element is a lens whose surface type is an extend polynomial, and the waveguide in-coupling module includes at least one lens, at least one reflector, and a transmissive grating.

With reference to the first aspect, in some implementations of the first aspect, the waveguide in-coupling module includes a first lens, a first reflector, and the transmissive grating that are sequentially arranged in the transmission direction of the image light.

With reference to the first aspect, in some implementations of the first aspect, the windshield correction element is further configured to serve as a dust cover of the display device.

With reference to the first aspect, in some implementations of the first aspect, the display device further includes a dust cover, and the windshield correction element is fixed integrally with the dust cover.

According to a second aspect, an embodiment of this application provides an in-vehicle system. The in-vehicle system includes the display device according to the first aspect and any the possible implementation of the first aspect and an instrument panel, and the display device is mounted in the instrument panel.

According to a third aspect, an embodiment of this application provides a vehicle. The vehicle includes the display device and the windshield according to the first aspect and any possible implementation of the first aspect, or the vehicle includes the cockpit system according to the second aspect.

### BRIEF DESCRIPTION OF DRAWINGS

FIG. 1 is a diagram of an application scenario of a HUD device according to an embodiment of this application;
FIG. 2 is a diagram of a structure of a display device 200 according to an embodiment of this application;
FIG. 3 shows a possible structure of a projection module 201 according to an embodiment of this application;
FIG. 4 shows a possible structure of a projection module 201 in which a modulation module 312 is a DMD according to an embodiment of this application;
FIG. 5 is a diagram of a structure of an optical imaging system 50 including a first display device 500 according to an embodiment of this application;
FIG. 6 is a diagram of a structure of an optical imaging system 60 including a second display device 600 according to an embodiment of this application;
FIG. 7 is a diagram of a structure of an optical imaging system 70 including a third display device 700 according to an embodiment of this application;
FIG. 8 is a diagram of a structure of an optical imaging system 80 including a fourth display device 800 according to an embodiment of this application;
FIG. 9 is a circuit diagram of a display device according to an embodiment of this application;
FIG. 10 is a diagram of a possible functional framework of a vehicle according to an embodiment of this application; and
FIG. 11 is a functional block diagram of a mobile carrier 1100 according to an embodiment of this application.

### DESCRIPTION OF EMBODIMENTS

The following describes technical solutions in embodiments in this application with reference to accompanying drawings.

For ease of understanding embodiments of this application, the following descriptions are provided.

First, in the following text descriptions or the accompanying drawings in embodiments of this application, terms such as "first" and "second" and various numbers are merely used for differentiation for ease of description, but do not necessarily describe a specific order or sequence, and are not intended to limit the scope of embodiments of this application. For example, different lenses are differentiated.

Second, in the following embodiments of this application, terms such as "include", "have", and any variants thereof mean to cover non-exclusive inclusion. For example, a process, method, system, product, or device that includes a series of steps or units is not necessarily limited to those steps or units that are expressly listed, but may include another step or unit not expressly listed or inherent to such a process, method, product, or device.

Third, in embodiments of this application, the term such as "example" or "for example" represents an example, an illustration, or a description. Any embodiment or design solution described as "example" or "for example" should not be explained as being more preferred or having more advantages than another embodiment or design solution. The word like "example" or "for example" is used to present a related concept in a specific manner for ease of understanding.

Fourth, in embodiments of this application, image light is light carrying an image (or image information), and is used to generate an image.

Fifth, in the accompanying drawings of this application, for ease of description, a thickness, a size, and a shape of each optical element are slightly exaggerated. Specifically, the shape of the optical element shown in the accompanying drawings is shown in an embodiment. For example, a shape of a curved mirror in this application is not limited to a shape of a spherical surface or an aspheric surface shown in the accompanying drawings. In addition, the accompanying drawings are merely examples and are not drawn strictly to scale.

Sixth, unless otherwise limited, all terms (including technical and scientific terms) used in this application have same meanings as understood usually by a person of ordinary skill in the art to which this application belongs. It should be further understood that, terms (such as those defined in common dictionaries) should be interpreted as having meanings consistent with their meanings in the context of related technologies, and will not be interpreted in an idealized or excessive formal sense, unless expressly defined in this specification.

Seventh, this application relates to an optical waveguide. The optical waveguide can be generally classified into a geometric waveguide (Geometric Waveguide) and a diffractive waveguide (Diffractive Waveguide). The geometric waveguide mainly includes an array waveguide and a sawtooth waveguide. The diffractive waveguide mainly includes a surface relief grating waveguide (Surface Relief Grating) waveguide manufactured by using a photolithography technology and a volumetric holographic grating waveguide (Volumetric Holographic Grating) waveguide manufactured by using a holographic interference technology.

Eighth, in this application, values such as thicknesses and radiuses of some optical elements are provided in a table. It should be understood that different precision values of these values should also fall within the protection scope of this application. For example, when the optical element is a lens, and a surface radius of the lens provided in the table is 29.98 m, this embodiment of this application further protects that the surface radius of the lens is 29.9810 mm or 30 mm. In addition, values near 29.98 m or approximate values of 29.98 m also fall within the protection scope of this application. Approximation refers to a method like rounding off, or rounding up or down.

Ninth, this application relates to a focal power (focal power). In an optical system, the focal power (focal power) is used to measure a capability of an optical system to converge or diverge light. An optical system with a positive focal power has a converging effect on light. On the contrary, an optical system with a negative focal power has a diverging effect on light.

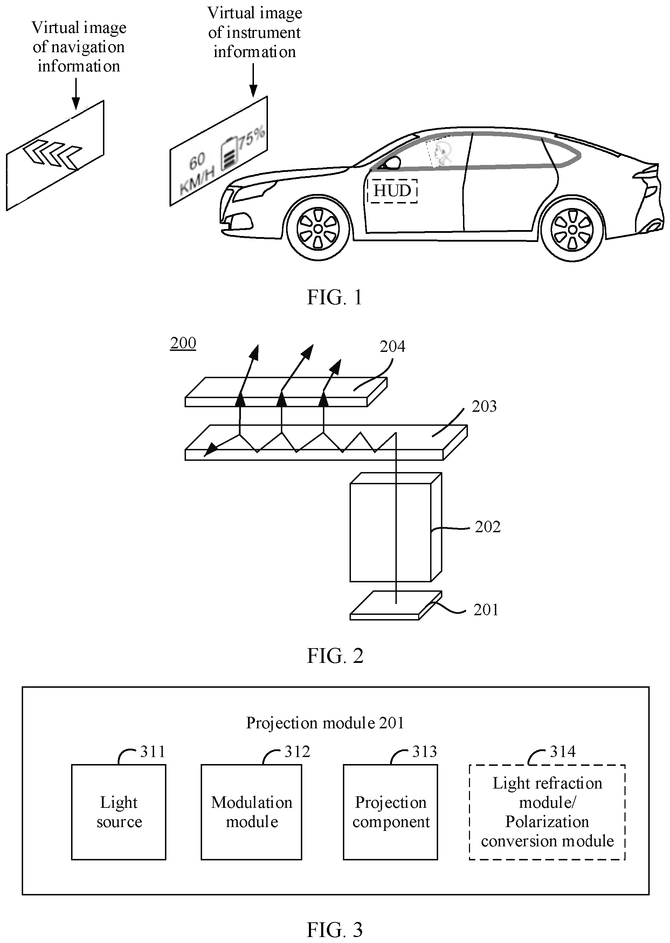

FIG. 1 is a diagram of an application scenario of a HUD device according to an embodiment of this application. As shown in FIG. 1, the HUD device is disposed on a vehicle. The HUD device is configured to project status information of the vehicle, indication information of an external object, navigation information, and the like into a field of view of a driver by using a windscreen (which may also be referred to as windshield) of the vehicle. The status information includes but is not limited to information such as a driving speed, a driving mileage, a fuel amount, a water temperature, and a vehicle light status. The indication information of the external object includes but is not limited to a safe inter-vehicle distance, a surrounding obstacle, a vehicle reversing image, and the like. The navigation information includes but is not limited to a direction arrow, a distance, and driving time.

Virtual images corresponding to the navigation information and the indication information of the external object may be superimposed on a real environment outside the vehicle, so that the driver can obtain a visual effect of augmented reality. For example, the virtual images may be used on an augmented reality (augmented reality, AR) navigation, adaptive cruise, lane departure warning, or the like. The virtual image corresponding to the navigation information may be combined with a real scene. Therefore, the HUD device usually works with an advanced driving assistant system (advanced driving assistant system, ADAS) of the vehicle. To avoid interfering with a road condition, a distance between human eyes and a virtual image corresponding to instrument information usually approximately ranges from 2 meters to 3 meters. To better fuse a real road surface with the virtual image corresponding to the navigation information, a distance between the human eyes and the virtual image corresponding to the navigation information usually approximately ranges from 7 meters to 15 meters. A position of the virtual image of the navigation information is referred to as a far focal plane. A plane at which the virtual image of the instrument information is located is referred to as a near focal plane.

Currently, a research focus of the HUD device is mainly on how to reduce a size of the device. A solution for effectively reducing the size of the HUD device is to use an optical waveguide as a medium for image light transmission. In this solution, after image light enters the optical waveguide from an in-coupling region of the optical waveguide, the image light is emitted in parallel from an out-coupling region of the optical waveguide through total reflection, and then enters the human eyes through the windshield, so that the human eyes view the virtual image. In this solution, the optical waveguide is only responsible for image light transmission, and generally does not perform any "work" (like zooming in or out) on the image itself. In other words, it may be understood as "parallel light entering, parallel light exiting". However, because different positions of the windshield have different curvatures, directions and/or angles of the image light reflected into the human eyes change, and the image light is no longer parallel. As a result, quality of the image viewed by the human eyes is poor. Therefore, in an optical waveguide HUD system, a correction element further needs to be disposed above the out-coupling region of the optical waveguide, to correct image quality deterioration caused by the windshield. However, a single correction element causes an additional system chromatic aberration to the HUD system, and a combined correction element causes an increase in the size of the HUD device.

In view of this, this application provides a display device, which can compensate for a chromatic aberration introduced by a correction element for correcting a curvature of a windshield, thereby improving imaging quality and improving user experience.

FIG. 2 is a diagram of a structure of a display device 200 according to an embodiment of this application. As shown in FIG. 2, the display device 200 includes a projection module 201, a waveguide in-coupling module 202, an optical waveguide 203, and a windshield correction element 204. The projection module 201 is configured to project image light to the waveguide in-coupling module 202. The waveguide in-coupling module 202 is configured to couple the image light from the projection module 201 into the optical waveguide 203, and further configured to compensate for a chromatic aberration value caused by the windshield correction element 204. The optical waveguide 203 is configured to emit the image light from the waveguide in-coupling module 202 to the windshield correction element 204. The windshield correction element 204 is configured to: adjust a transmission angle and/or a transmission direction of the image light from the optical waveguide, and emit the adjusted image light to a windshield.

It may be understood that the image light emitted by the optical waveguide 203 is approximately parallel light. Therefore, when the display device 200 does not include the windshield correction element 204, the image light emitted by the optical waveguide 203 is no longer approximately parallel light after being reflected by the windshield with different curvatures. As a result, an image viewed by human eyes suffers from distortion and other forms of degradation. Therefore, to eliminate image quality degradation caused by the windshield, the windshield correction element 204 is disposed in front of the windshield, and the image light is deflected by adjusting a propagation angle and/or a propagation direction of the image light. When the image light after deflection is deflected by the windshield again, the emitted light is approximately parallel light, thereby avoiding impact of the windshield on image quality. It should be noted that, a deflection effect of the windshield correction element 204 and the windshield on the image light may be measured by using different parameters, for example, a focal length and a refractive index of the windshield correction element 204 or the windshield, a distance between the windshield correction element 204 and the windshield, focal powers of the windshield correction element 204 and the windshield, and a focal power of a combined system including the windshield correction element 204 and the windshield. In a solution of this application, an example in which the focal power is used as a parameter for measuring a correction effect is used for description. Specifically, in the solution of this application, the focal power of the combined system including the windshield correction element 204 and the windshield is designed to be approximately zero, to reflect a correction effect of the windshield correction element 204 on the windshield. Optionally, the focal power Φ₁ of the windshield and the focal power Φ₂ of the windshield correction element satisfy: $- 0.5 {m}^{- 1} \leq \left({Φ}_{1}+{Φ}_{2}\right) \leq 0.5 {m}^{- 1} .$

It should be noted that, light rays of different wavelengths exist in the image light incident to the windshield correction element 204. After light rays of a plurality of wavelengths are transmitted through the windshield correction element 204, because refraction of the windshield correction element 204 on the light rays of different wavelengths is different, the light rays of different wavelengths cannot be focused on a same plane. In a severe case, color fringing exists in the generated display image, affecting viewing experience of a user. Therefore, in this application, the waveguide in-coupling module 202 compensates for a dispersion phenomenon existing in the windshield correction element 204. Specifically, in the solution of this application, a chromatic aberration caused by the waveguide in-coupling module 202 is designed, so that a chromatic aberration value caused by the waveguide in-coupling module 202 is close but in an opposite direction to the chromatic aberration value caused by the windshield correction element 204, that is, a chromatic aberration caused by a combined system including the waveguide in-coupling module 202 and the windshield correction element 204 is close to zero, thereby achieving a chromatic aberration compensation effect. Optionally, when C light and F light are used to represent the chromatic aberration value, in the display device 200 provided in this application, the chromatic aberration value Δ*θ*_{*CF*1} caused by the windshield correction element 204 and the chromatic aberration value Δ*θ*_{*CF*2} caused by the waveguide in-coupling module 202 satisfy the following relationship: $- 3 mrad \leq \left(Δ{θ}_{CF 1}+Δ{θ}_{CF 2}\right) \leq 3 mrad .$

Herein, Δ*θ*_{*CF*1} represents an angle deviation between the C light and the F light corresponding to the windshield correction element 204 at a maximum field of view *θ*, Δ*θ*_{*CF*2} represents an angle deviation between the C light and the F light corresponding to the waveguide in-coupling module 202 at the maximum field of view *θ*, a wavelength of the C light is 656 nm, a wavelength of the F light is 486 nm, mrad denotes a unit of measurement milliradian, and signs of Δ*θ*_{*CF*1} and Δ*θ*_{*CF*2} are opposite.

Generally, the chromatic aberration caused by the windshield correction element 204 is within a specific range. Therefore, in the solution of this application, the chromatic aberration value caused by the waveguide in-coupling module 202 may be designed to compensate for a median value of the chromatic aberration caused by the windshield correction element 204. In this way, when the display device in this application is used in different vehicle models, customized development does not need to be performed for each vehicle model, thereby reducing development costs.

It should be noted that a type and a quantity of optical elements in the waveguide in-coupling module 202 are not limited in this application. For example, the waveguide in-coupling module 202 may include a plurality of lenses, or include at least one lens and at least one reflector, or include at least one lens and a grating, or include at least one lens, at least one reflector, and a grating.

In addition, to avoid increasing a size of the display device 200, in the solution of this application, the windshield correction element 204 is a single non-combined element. For example, the windshield correction element 204 may be a transmissive diffraction grating, a freeform mirror, a Fresnel lens, or the like. This is not limited in this application.

It should be further noted that a type of the optical waveguide 203 is not limited in this application. The optical waveguide 203 may be a geometric waveguide, for example, a sawtooth waveguide or an array waveguide, or may be a diffractive waveguide, for example, a surface relief grating waveguide or a volumetric holographic grating waveguide (which may also be referred to as a volumetric holographic optical waveguide). It may be understood that the foregoing examples are merely the currently common optical waveguides. Other new optical waveguides emerging with future technology development are also applicable to the solution of this application. Optionally, a material of the optical waveguide 203 is inorganic optical glass, for example, borosilicate glass BK7. Alternatively, the material of the optical waveguide 203 is thermoplastic plastic, for example, a polypropylene (polypropylene, PP) material, a polymethyl methacrylate (polymethyl methacrylate, PMMA) material, or a polycarbonate (polycarbonate, PC) material. This is not limited in this application.

In this embodiment of this application, the projection module 201 may be a liquid crystal on silicon (Liquid Crystal On Silicon, LCoS) display, an organic light-emitting diode (Organic Light-Emitting Diode, OLED) display, a liquid crystal display (Liquid Crystal Display, LCD), a digital light procession (Digital Light Procession, DLP) display, a micro-electro-mechanical system (Micro-Electro-Mechanical System, MEMS) display, an organic light-emitting diode (organic light-emitting diode, OLED) display, a micro light-emitting diode (Micro-LED) display, a display using a mini LED display technology, or the like. This is not limited in this application.

In an example, FIG. 3 shows a possible structure of a projection module 201 according to an embodiment of this application. The projection module 201 includes a light source 311, a modulation module 312, and a projection component 313. According to different display technologies used by the projection module 201, the modulation module 312 may be an LCoS modulator, a DMD, a transmissive spatial light modulator LCD, or the like. For example, when the modulation module 312 is an LCoS modulator, the light source 311 may be a light source, to be specific, a red, green, and blue tri-color light emitting diode (light emitting diode), and jointly forms an LCoS display with the LCoS modulator. When the modulation module 312 is a DMD, the modulation module may be a DMD modulator controlled by an MEMS, and may be used together with a laser light source or an LED light source to form a DLP display. Alternatively, when the modulation module 312 is an LCD modulator, the light source 311 may be a linear light source, to be specific, a red, green, and blue tri-color cold cathode fluorescent tube, and forms an LCD display with the LCD modulator. The projection component 313 may be a projection lens.

Optionally, to improve projection quality and/or reduce a size of the projection module 201, in some embodiments, the projection module 201 further includes a light refraction module 314, or the projection module 201 further includes a polarization conversion module 314. When the projection module 201 includes the light refraction module 314, the light refraction module 314 may be one or more lenses (configured to: focus energy of a light beam to ensure the energy of the light beam; or diffuse a light spot to increase a field of view of projection), one or more prisms (configured to: fold an optical path to reduce the size of the projection module), and/or the like. This is not limited in this application. When the projection module 201 includes the polarization conversion module 314, the polarization conversion module 314 is configured to change a polarization state of the image light.

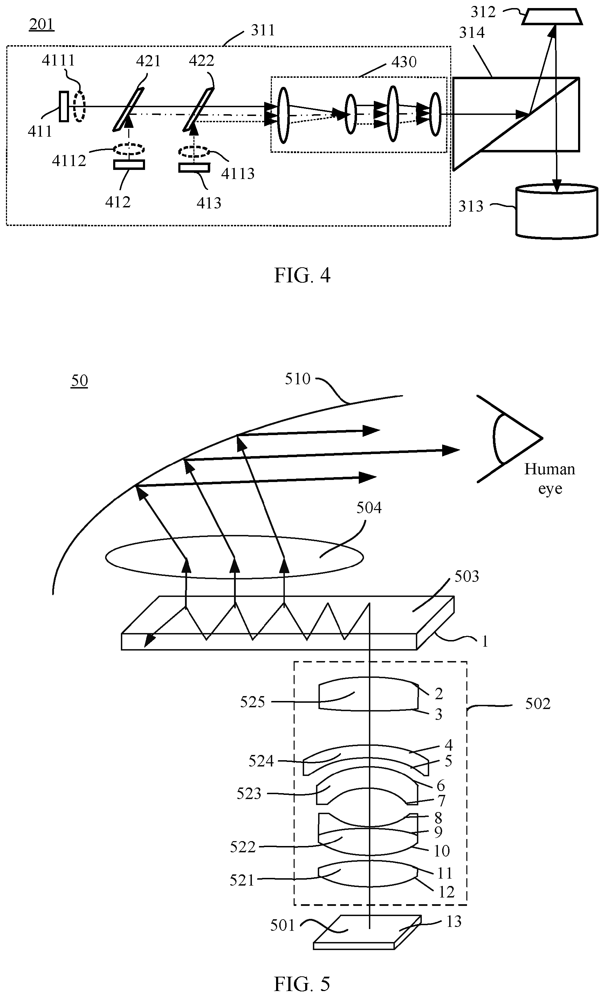

In an example, FIG. 4 shows a possible structure of a projection module 201 in which a modulation module 312 is a DMD according to an embodiment of this application. As shown in FIG. 4, the light source 311 includes a first monochromatic light array 411, a second monochromatic light array 412, a third monochromatic light array 413, dichroic filters 421 and 422, and a lens group 430. The light refraction module 314 is a prism. The three monochromatic light arrays may respectively correspond to monochromatic light of three primary colors, including red light, blue light, and green light. To improve light energy utilization, in some embodiments, collimating lenses may further be arranged behind the monochromatic light arrays, for example, a collimating lens 4111, a collimating lens 4112, and a collimating lens 4113 in FIG. 4. Specifically, when the projection module 201 works, the first monochromatic light array 411, the second monochromatic light array 412, and the third monochromatic light array 413 separately emit corresponding monochromatic light. The three types of monochromatic light are incident to the lens group 430 through the dichroic filters 421 and 422. After being emitted from the lens group 430, the monochromatic light is incident to the DMD through the prism. The DMD modulates the input light beam based on data information of the input image, and outputs the image light. The image light is incident to the projection component 313 after being transmitted through the prism, and is emitted to the waveguide in-coupling module 202 through the projection component 313.

It may be understood that, when the display device 200 is used as a HUD display device, the display device 200 further has a housing configured to protect the projection module 201, the waveguide in-coupling module 202, the optical waveguide 203, and the windshield correction element 204. The housing may be made of plastic, metal, or a combination of plastic and metal. In addition, the display device 200 further includes a dust cover. In an implementation, the windshield correction element 204 is further configured to serve as the dust cover of the display device 200. In this case, a size of the windshield correction element 204 is equivalent to a size of the dust cover reserved on the housing. In another implementation, the windshield correction element 204 may be fixed integrally with the dust cover. For example, the windshield correction element 204 is attached to the dust cover by using transparent optical adhesive.

It may be further understood that the display device provided in this embodiment of this application may be mounted in an instrument panel (instrument panel, IP) of a vehicle.

Based on the foregoing descriptions in FIG. 2, the following separately describes, with reference to FIG. 5 to FIG. 8, specific embodiments of an optical imaging system 50 including a first display device 500, an optical imaging system 60 including a second display device 600, an optical imaging system 70 including a third display device 700, and an optical imaging system 80 including a fourth display device 800 in embodiments of this application.

FIG. 5 is a diagram of a structure of an optical imaging system 50 including a first display device 500 according to an embodiment of this application. Specifically, the optical imaging system 50 includes the display device 500 and a windshield 510. The display device 500 includes a projection module 501, a waveguide in-coupling module 502, a surface relief grating waveguide 503, and a windshield correction lens 504. A surface type of the windshield correction lens 504 is an extend polynomial. The waveguide in-coupling module 502 includes a first lens 521, a second lens 522, a third lens 523, a fourth lens 524, and a fifth lens 525 that are sequentially arranged in a transmission direction of image light, and the second lens 522 is a doublet lens.

Specifically, when the optical imaging system 50 works, the projection module 501 emits the image light to the waveguide in-coupling module 502. After being sequentially transmitted through the first lens 521, the second lens 522, the third lens 523, the fourth lens 524, and the fifth lens 525, the image light is coupled into the surface relief grating waveguide 503 from an in-coupling region of the surface relief grating waveguide 503. After being transmitted in the surface relief grating waveguide 503, the image light is emitted from an out-coupling region of the surface relief grating waveguide 503 to the windshield correction lens 504, then is transmitted to a surface of the windshield 510, and is reflected by the windshield 510 into human eyes.

For example, Table 1 shows related optical data of the windshield correction lens 504.

**Table 1**

| Surface number | Surface type | Thickness TH (mm) | Refractive index Nd | Abbe number Vd |
|---|---|---|---|---|
| 1 | Extend Polynomial | 7 | 1.49 | 57.4 |
| 2 | Extend Polynomial | 0 | | |

For example, Table 2 shows related optical data of the waveguide in-coupling module 502.

**Table 2**

| Surface number | Curvature radius R (mm) | Thickness TH (mm) | Refractive index Nd | Abbe number Vd |
|---|---|---|---|---|
| 1 (STO) | Infinity | 0.20 | | |
| 2 | 29.98 | 8.01 | 1.49 | 81.61 |
| 3 | -264.00 | 5.51 | | |
| 4 | 15.00 | 2.99 | 1.59 | 68.34 |
| 5 | 18.69 | 0.43 | | |
| 6 | 14.31 | 4.98 | 1.94 | 17.94 |
| 7 | 8.97 | 5.28 | | |
| 8 | -13.98 | 1.96 | 1.80 | 25.46 |
| 9 | 17.38 | 4.73 | 1.59 | 68.34 |
| 10 | -20.75 | 3.72 | | |
| 11 | 48.77 | 4.06 | 2.00 | 25.43 |
| 12 | -36.88 | 17.04 | | |
| 13 (projection module) | Infinity | | | |

It should be noted that, in this embodiment of this application, an absolute value of a curvature radius R represents a magnitude of a curvature radius of the corresponding surface, and a positive or negative sign represents a bending direction of the corresponding surface. When the sphere center of a spherical surface corresponding to the curvature radius is located on the left side of the vertex of the spherical surface, a sign of the curvature radius of the spherical surface is negative. When the sphere center of the spherical surface corresponding to the curvature radius is located on the right side of the vertex of the spherical surface, the sign of the curvature radius of the spherical surface is positive.

It should be further noted that the data in Table 1 and Table 2 is not accurate values, but merely approximate values.

It may be understood that the curvature radius in Table 1 and Table 2 is infinite, which is an ideal design. In actual processing, there is a difference between the curvature radius and an ideal curvature radius due to a processing error.

In the optical imaging system 50 shown in FIG. 5, a chromatic aberration value Δ*θ*_{*CF*1} caused by the windshield correction lens 504 and a chromatic aberration value Δ*θ*_{*CF*2} caused by the waveguide in-coupling module 502 satisfy: (Δ*θ*_{*CF*1} *+*Δ*θ*_{*CF*2}) = 0.3*mrad* . A focal power Φ₁ of the windshield 510 and a focal power Φ₂ of the windshield correction lens 504 satisfy: (Φ₁ +Φ₂) =0.05*m*⁻¹.

For other descriptions of the projection module 501, the waveguide in-coupling module 502, the surface relief grating waveguide 503, and the windshield correction lens 504 included in the display device 500, refer to corresponding parts in FIG. 2. Details are not described herein again.

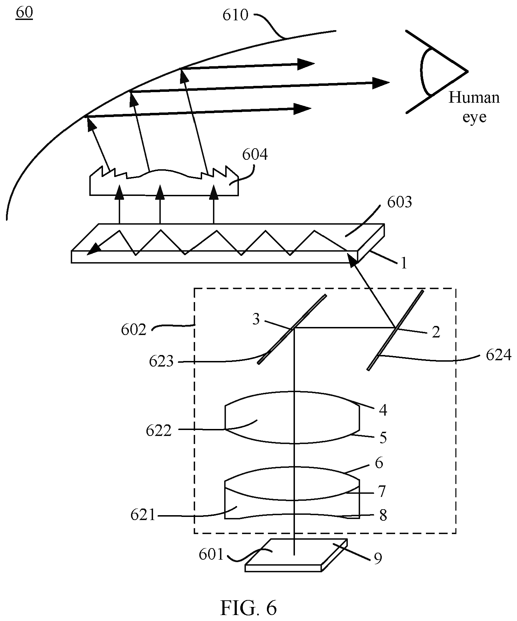

FIG. 6 is a diagram of a structure of an optical imaging system 60 including a second display device 600 according to an embodiment of this application. Specifically, the optical imaging system 60 includes the display device 600 and a windshield 610. The display device 600 includes a projection module 601, a waveguide in-coupling module 602, a geometric reflector array waveguide 603, and a Fresnel lens 604. The waveguide in-coupling module 502 includes a first lens 621, a second lens 622, a first reflector 623, and a second reflector 624 that are sequentially arranged in a transmission direction of image light, and the first lens 621 is a doublet lens.

Specifically, when the optical imaging system 60 works, the projection module 601 emits the image light to the waveguide in-coupling module 602. After being sequentially transmitted through the first lens 621 and the second lens 622, and being emitted from the second lens 622, the image light is reflected by the first reflector 623 and the second reflector 624 in sequence. Then, the image light is coupled into the geometric reflector array waveguide 603 from an in-coupling region of the geometric reflector array waveguide 603. After being transmitted in the geometric reflector array waveguide 603, the image light is emitted from an out-coupling region of the geometric reflector array waveguide 603 to the Fresnel lens 604, then is transmitted to a surface of the windshield 610, and is reflected by the windshield 610 into human eyes.

For example, Table 3 shows related optical data of the Fresnel lens 604.

**Table 3**

| Surface number | Surface type | Thickness TH (mm) | Refractive index Nd | Abbe number Vd |
|---|---|---|---|---|
| 1 | Fresnel | 5 | 1.49 | 57.4 |
| 2 | Fresnel | 0 | | |

For example, Table 4 shows related optical data of the waveguide in-coupling module 602.

**Table 4**

| Surface number | Curvature radius R (mm) | Thickness TH (mm) | Refractive index Nd | Abbe number Vd |
|---|---|---|---|---|
| 1 (STO) | Infinity | 15.00 | | |
| 2 | -262.71 | -25.00 | MIRROR | MIRROR |
| 3 | -168.50 | 15.00 | MIRROR | MIRROR |
| 4 | 80.09 | 8.50 | 1.52 | 64.20 |
| 5 | -61.42 | 5.60 | | |
| 6 | 27.57 | 8.95 | 1.59 | 61.25 |
| 7 | -40.00 | 3.15 | 1.62 | 36.35 |
| 8 | 88.70 | 24.34 | | |
| 9 (projection module) | Infinity | | | |

Similarly, an absolute value of the curvature radius R represents a curvature radius of the corresponding surface, and a positive or negative sign represents a bending direction of the corresponding surface. The data in Table 3 and Table 4 is not accurate values, but merely approximate values. It is an ideal design that the curvature radius is infinite.

In the optical imaging system 60 shown in FIG. 6, a chromatic aberration value Δ*θ*_{*CF*1} caused by the Fresnel lens 604 and a chromatic aberration value Δ*θ*_{*CF*2} caused by the waveguide in-coupling module 602 satisfy: (Δ*θ*_{*CF*1} *+*Δ*θ*_{*CF*2}) =-0.6*mrad .* A focal power Φ₁ of the windshield 610 and a focal power Φ₂ of the Fresnel lens 604 satisfy: (Φ₁ +Φ₂) =0.13*m*⁻¹.

For other descriptions of the projection module 601, the waveguide in-coupling module 602, the geometric reflector array waveguide 603, and the Fresnel lens 604 included in the display device 600, refer to corresponding parts in FIG. 2. Details are not described herein again.

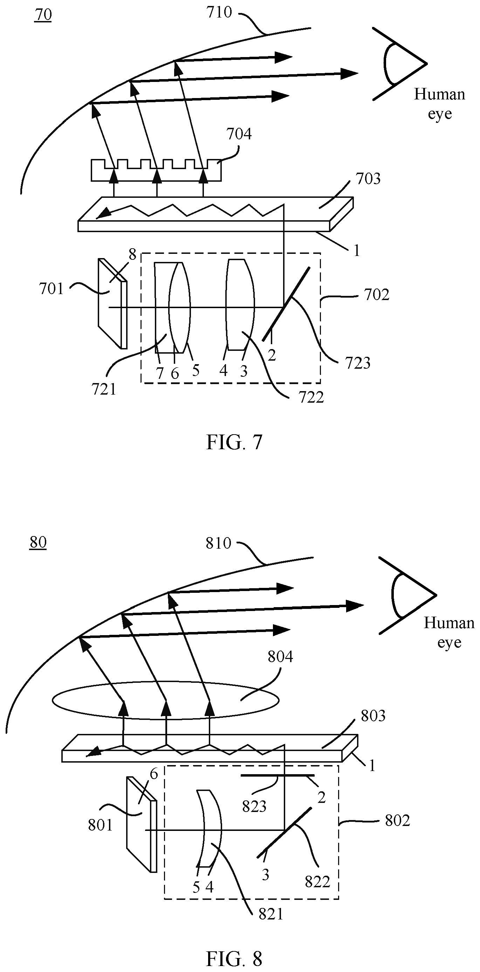

FIG. 7 is a diagram of a structure of an optical imaging system 70 including a third display device 700 according to an embodiment of this application. Specifically, the optical imaging system 70 includes the display device 700 and a windshield 710. The display device 700 includes a projection module 701, a waveguide in-coupling module 702, a surface relief grating waveguide 703, and a transmissive grating 704. The waveguide in-coupling module 702 includes a first lens 721, a second lens 722, and a reflective grating 723 that are sequentially arranged in a transmission direction of image light, and the first lens 721 is a doublet lens. The optical waveguide 703 is a surface relief grating waveguide, but this application is not limited thereto.

Specifically, when the optical imaging system 70 works, the projection module 701 emits the image light to the waveguide in-coupling module 702. After being sequentially transmitted through the first lens 721 and the second lens 722, and being reflected by the reflective grating 723, the image light is coupled into the surface relief grating waveguide 703 from an in-coupling region of the surface relief grating waveguide 703. After being transmitted in the surface relief grating waveguide 703, the image light is emitted from an out-coupling region of the surface relief grating waveguide 703 to the transmissive grating 704, then is transmitted to a surface of the windshield 710, and is reflected by the windshield 710 into human eyes.

For example, Table 5 shows related optical data of the transmissive grating 704.

**Table 5**

| Surface number | Surface type |
|---|---|
| 1 | Hologram 1 |

For example, Table 6 shows related optical data of the waveguide in-coupling module 702.

**Table 6**

| Surface number | Curvature radius R (mm) | Thickness TH (mm) | Refractive index Nd | Abbe number Vd |
|---|---|---|---|---|
| 1 (STO) | Infinity | 15.00 | | |
| 2 | Hologram 2 | -20.00 | MIRROR | MIRROR |
| 3 | -36.62 | -8.50 | 1.52 | 64.20 |
| 4 | 173.83 | -5.60 | | |
| 5 | -25.92 | -8.91 | 1.44 | 94.52 |
| 6 | 25.40 | -3.15 | 1.52 | 64.20 |
| 7 | 427.30 | -17.80 | | |
| 8 (projection module) | Infinity | | | |

Similarly, an absolute value of the curvature radius R represents a curvature radius of the corresponding surface, and a positive or negative sign represents a bending direction of the corresponding surface. The data in Table 5 and Table 6 is not accurate values, but merely approximate values. It is an ideal design that the curvature radius is infinite.

In the optical imaging system 70 shown in FIG. 7, a chromatic aberration value Δ*θ*_{*CF*1} caused by the transmissive grating 704 and a chromatic aberration value Δ*θ*_{*CF*2} caused by the waveguide in-coupling module 702 satisfy: *(*Δ*θ*_{*CF*1} *+*Δ*θ*_{*CF*2}) *=*1.8*mrad* . A focal power Φ₁ of the windshield 710 and a focal power Φ₂ of the transmissive grating 704 satisfy: (Φ₁ +Φ₂) *=*0.4*m*⁻¹.

For other descriptions of the projection module 701, the waveguide in-coupling module 702, the surface relief grating waveguide 703, and the windshield correction element transmissive grating 704 included in the display device 700, refer to corresponding parts in FIG. 2. Details are not described herein again.

FIG. 8 is a diagram of a structure of an optical imaging system 80 including a fourth display device 800 according to an embodiment of this application. Specifically, the optical imaging system 80 includes the display device 800 and a windshield 810. The display device 800 includes a projection module 801, a waveguide in-coupling module 802, a volumetric holographic grating waveguide 803, and a windshield correction lens 804. A surface type of the windshield correction lens 804 is an extend polynomial. The waveguide in-coupling module 802 includes a first lens 821, a first reflector 822, and a transmissive grating 823 that are sequentially arranged in a transmission direction of image light.

Specifically, when the optical imaging system 80 works, the projection module 801 emits the image light to the waveguide in-coupling module 802. After being transmitted through the first lens 821, the image light is reflected by the first reflector 822 to the transmissive grating 823. After being emitted from the transmissive grating 823, the image light is coupled into the volumetric holographic grating waveguide 803 from an in-coupling region of the volumetric holographic grating waveguide 803. After being transmitted in the volumetric holographic grating waveguide 803, the image light is emitted from an out-coupling region of the volumetric holographic grating waveguide 803 to the windshield correction lens 804, then is transmitted to a surface of the windshield 810, and is reflected by the windshield 810 into human eyes.

For example, Table 7 shows related optical data of the windshield correction lens 804.

**Table 7**

| Surface number | Surface type | Thickness TH (mm) | Refractive index Nd | Abbe number Vd |
|---|---|---|---|---|
| 1 | Extend Polynomial | 7 | 1.49 | 57.4 |
| 2 | Extend Polynomial | 0 | | |

For example, Table 8 shows related optical data of the waveguide in-coupling module 802.

**Table 8**

| Surface number | Curvature radius R (mm) | Thickness TH (mm) | Refractive index Nd | Abbe number Vd |
|---|---|---|---|---|
| 1 (STO) | Infinity | 3.00 | | |
| 2 | Hologram 2 | 12 | | |
| 3 | -2475.36 | -15.00 | MIRROR | MIRROR |
| 4 | -78.82 | -8.50 | 1.59 | 68.34 |
| 5 | -68.76 | -23.00 | | |
| 6 (projection module) | Infinity | | | |

Similarly, an absolute value of the curvature radius R represents a curvature radius of the corresponding surface, and a positive or negative sign represents a bending direction of the corresponding surface. The data in Table 7 and Table 8 is not accurate values, but merely approximate values. It is an ideal design that the curvature radius is infinite.

In the optical imaging system 80 shown in FIG. 8, a chromatic aberration value Δ*θ*_{*CF*1} caused by the windshield correction lens 804 and a chromatic aberration value Δ*θ*_{*CF*2} caused by the waveguide in-coupling module 802 satisfy: (Δ*θ*_{*CF*1} *+*Δ*θ*_{*CF*2}) *=*-1.6*mrad .* A focal power Φ₁ of the windshield 810 and a focal power Φ₂ of the windshield correction lens 804 satisfy: (Φ₁ + Φ₂) =-0.07*m*⁻¹.

For other descriptions of the projection module 801, the waveguide in-coupling module 802, the optical waveguide 803, and the windshield correction element 804 included in the display device 800, refer to corresponding parts in FIG. 2. Details are not described herein again.

It should be noted that FIG. 5 to FIG. 8 are merely some embodiments provided in this application, and do not constitute a limitation on the protection scope of this application. Embodiments of FIG. 5 to FIG. 8 may be implemented independently, or may be partially combined with each other. For example, the waveguide in-coupling module 502 in the embodiment shown in FIG. 5 may be used in the embodiment shown in FIG. 6.

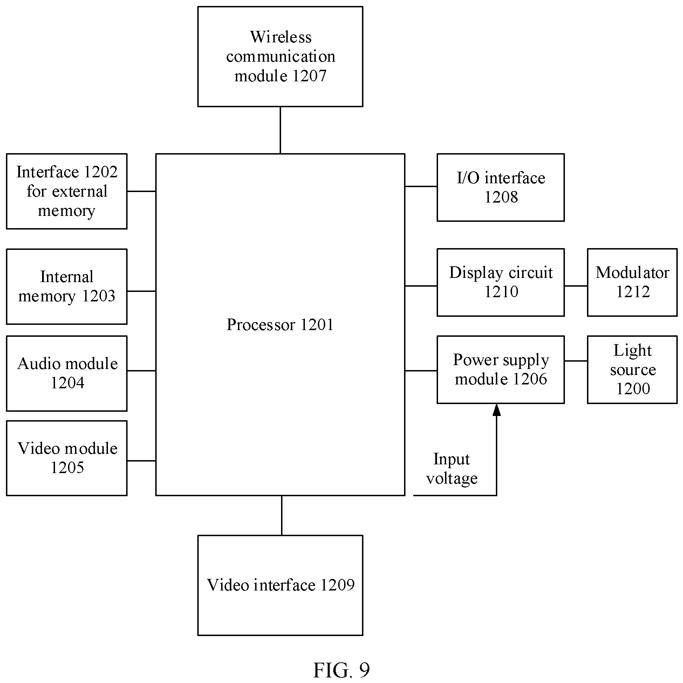

FIG. 9 is a circuit diagram of a display device according to an embodiment of this application. As shown in FIG. 9, a circuit of the display device mainly includes a host processor (host CPU) 1201, an interface 1202 for external memory, an internal memory 1203, an audio module 1204, a video module 1205, a power supply module 1206, a wireless communication module 1207, an I/O interface 1208, a video interface 1209, a display circuit 1210, a modulator 1212, and the like. The host processor 1201 may be connected, through a bus, to peripheral elements of the host processor, such as the interface 1202 for external memory, the internal memory 1203, the audio module 1204, the video module 1205, the power supply module 1206, the wireless communication module 1207, the I/O interface 1208, the video interface 1209, and the display circuit 1210. The host processor 1201 may be referred to as a front-end processor.

In addition, the circuit diagram in this embodiment of this application does not constitute a specific limitation on the display device. In some other embodiments of this application, the display device may include more or fewer components than those shown in the figure, or a combination of a part of the components, or splits from a part of the components, or an arrangement of different components. The components shown in the figure may be implemented by hardware, software, or a combination of software and hardware.

The host processor 1201 includes one or more processing units. For example, the host processor 1201 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, a neural-network processing unit (Neural-Network Processing Unit, NPU), and/or the like. Different processing units may be independent components, or may be integrated into one or more processors.

A memory may be further disposed in the host processor 1201, and is configured to store instructions and data. In some embodiments, the memory in the host processor 1201 is a cache. The memory may store instructions or data just used or cyclically used by the host processor 1201. If the host processor 1201 needs to use the instructions or the data again, the host processor may directly invoke the instructions or the data from the memory. This avoids repeated access and reduces waiting time of the host processor 1201, so that system efficiency is improved.

In some embodiments, the display device may further include a plurality of input/output (Input/Output, I/O) interfaces 1208 connected to the host processor 1201. The interface 1208 may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like. The I/O interface 1208 may be connected to a device like a mouse, a touchpad, a keyboard, a camera, a speaker/horn, a microphone, or the like, or may be connected to a physical button (for example, a volume button, a brightness adjustment button, a power-on/off button, or the like) on the display device.

The interface 1202 for external memory may be configured to connect to an external storage card, for example, a micro-SD card, to extend a storage capability of the display device. The external storage card communicates with the host processor 1201 through the interface 1202 for external memory, to implement a data storage function.

The internal memory 1203 may be configured to store computer-executable program code. The executable program code includes instructions. The internal memory 1203 may include a program storage region and a data storage region. The program storage region may store an operating system, an application required by at least one function (for example, a call function or a time setting function), and the like. The data storage region may store data (such as a phone book and world time) created in a process of using the display device, and the like. In addition, the internal memory 1203 may include a high-speed random access memory, or may include a non-volatile memory, for example, at least one magnetic disk storage device, a flash memory, or a universal flash storage (Universal Flash Storage, UFS). The host processor 1201 executes various functional applications and data processing of the display device by running the instructions stored in the internal memory 1203 and/or the instructions stored in the memory disposed in the host processor 1201.

The display device may implement an audio function, for example, music playing and calling, through the audio module 1204, the application processor, and the like.

The audio module 1204 is configured to convert digital audio information into an analog audio signal for output, and is further configured to convert an analog audio input into a digital audio signal. The audio module 1204 may be further configured to encode and decode an audio signal, for example, perform audio playing or audio recording. In some embodiments, the audio module 1204 may be disposed in the host processor 1201, or some functional modules of the audio module 1204 are disposed in the host processor 1201.

The video interface 1209 may receive an audio and video signal input externally, and may be specifically a high definition multimedia interface (High Definition Multimedia Interface, HDMI), a digital visual interface (Digital Visual Interface, DVI), a video graphics array (Video Graphics Array, VGA), or a display port (Display port, DP), or the like. The video interface 1209 may further output a video. When the display device is used as a head-up display, the video interface 1209 may receive a speed signal and a power signal that are input by a nearby device, and may further receive an AR video signal input externally. When the display device is used as a projector, the video interface 1209 may receive a video signal input by an external computer or a terminal device.

The video module 1205 may decode a video input through the video interface 1209, for example, perform H.264 decoding. The video module may further encode a video collected by the display device, for example, perform H.264 encoding on a video collected by an external camera. In addition, the host processor 1201 may also decode the video input through the video interface 1209, and then output a decoded image signal to the display circuit 1210.

The display circuit 1210 and the modulator 1212 are configured to display a corresponding image. In this embodiment, the video interface 1209 receives a video source signal input externally, the video module 1205 performs decoding and/or digitization processing and outputs one or more image signals to the display circuit 1210, and the display circuit 1210 drives, based on the input image signal, the modulator 1212 to perform imaging on incident polarized light, to output image light. In addition, the host processor 1201 may also output one or more image signals to the display circuit 1210.

In this embodiment, the display circuit 1210 and the modulator 1212 are electronic components in the modulation unit 712 shown in FIG. 8. The display circuit 1210 may be referred to as a drive circuit.

The power supply module 1206 is configured to supply power to the host processor 1201 and a light source 1200 based on input electric power (for example, a direct current). The power supply module 1206 may include a rechargeable battery, and the rechargeable battery may supply power to the host processor 1201 and the light source 1200. Light emitted by the light source 1200 may be transmitted to the modulator 1212 for imaging, to form an image optical signal.

The wireless communication module 1207 may enable the display device to perform wireless communication with the outside, and may provide wireless communication solutions such as a wireless local area network (Wireless Local Area Network, WLAN) (for example, a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication (Near Field Communication, NFC) technology, and an infrared (Infrared, IR) technology. The wireless communication module 1207 may be one or more components integrating at least one communication processor module. The wireless communication module 1207 receives an electromagnetic wave through the antenna, performs frequency modulation and filtering processing on the electromagnetic wave signal, and sends a processed signal to the host processor 1201. The wireless communication module 1207 may further receive a to-be-sent signal from the host processor 1201, perform frequency modulation and amplification on the signal, and convert a processed signal into an electromagnetic wave for radiation through the antenna.

In addition, video data decoded by the video module 1205 may be input through the video interface 1209 and received by the wireless communication module 1207 in a wireless manner or read from an external memory. For example, the display device may receive video data from a terminal device or an in-vehicle entertainment system through a wireless local area network in a vehicle. The display device may further read audio/video data stored in the external memory.

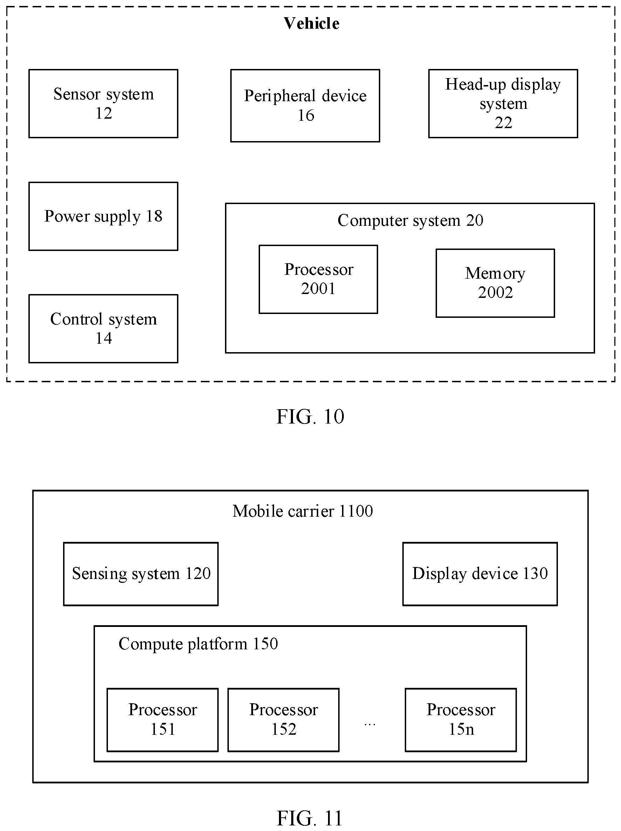

The display device may be mounted on a vehicle. FIG. 10 is a diagram of a possible functional framework of a vehicle according to an embodiment of this application.

As shown in FIG. 10, the functional framework of the vehicle may include various subsystems such as a sensor system 12, a control system 14, one or more peripheral devices 16 (one is shown as an example in the figure), a power supply 18, a computer system 20, and a head-up display system 22. Optionally, the vehicle may further include another functional system, for example, an engine system that supplies power to the vehicle. This is not limited herein in this application.

The sensor system 12 may include several detection apparatuses. The detection apparatuses can sense measured information, and convert, according to a specific rule, the sensed information into an electrical signal or information in another required form for output. As shown in the figure, the detection apparatuses may include a global positioning system (global positioning system, GPS), a vehicle speed sensor, an inertial measurement unit (inertial measurement unit, IMU), a radar unit, a laser rangefinder, a camera apparatus, a wheel speed sensor, a steering sensor, a gear sensor, another element used for automatic detection, or the like, and this is not limited in this application.

The control system 14 may include a plurality of elements, for example, a steering unit, a brake unit, a lighting system, an autonomous driving system, a map navigation system, a network time system, and an obstacle avoidance system shown in the figure. Optionally, the control system 14 may further include elements such as a throttle controller and an engine controller that are configured to control a driving speed of a vehicle. This is not limited in this application.

The peripheral device 16 may include several elements such as a communication system, a touchscreen, a user interface, a microphone, and a speaker shown in the figure. The communication system is configured to implement network communication between the vehicle and a device other than the vehicle. In practice, the communication system may implement network communication between the vehicle and another device by using a wireless communication technology or a wired communication technology. The wired communication technology may mean that the vehicle communicates with another device through a network cable, an optical fiber, or the like.

The power supply 18 represents a system used to provide power or energy for the vehicle, and may include but is not limited to a rechargeable lithium battery and lead-acid battery. In practice, one or more battery modules in the power supply are configured to provide electrical energy or energy for starting the vehicle. A type and a material of the power supply are not limited in this application.

Several functions of the vehicle are all controlled and implemented by the computer system 20. The computer system 20 may include one or more processors 2001 (one processor is shown as an example in the figure) and a memory 2002 (which may also be referred to as a storage apparatus). In practice, the memory 2002 is also disposed inside the computer system 20, or may be disposed outside the computer system 20, for example, used as a cache in the vehicle. This is not limited in this application. The processor 2001 may include one or more general-purpose processors, for example, a graphics processing unit (graphics processing unit, GPU). The processor 2001 may be configured to run a related program stored in the memory 2002 or instructions corresponding to a program, to implement a corresponding function of the vehicle.

The memory 2002 may include a volatile memory (volatile memory), for example, a RAM; or the memory may alternatively include a non-volatile memory (non-volatile memory), for example, a ROM, a flash memory (flash memory), an HDD, or a solid-state drive (SSD); or the memory 2002 may include a combination of the foregoing types of memories. The memory 2002 may be configured to store a set of program code or instructions corresponding to the program code, so that the processor 2001 invokes the program code or the instructions stored in the memory 2002 to implement a corresponding function of the vehicle. In this application, the memory 2002 may store a set of program code used to control the vehicle. The processor 2001 may control safe driving of the vehicle by invoking the program code. A manner of implementing safe driving of the vehicle is specifically described in detail below in this application.

Optionally, in addition to storing the program code or instructions, the memory 2002 may further store information such as a road map, a driving route, and sensor data. The computer system 20 may implement a vehicle-related function in combination with other elements in the diagram of the functional framework of the vehicle, for example, the sensor and the GPS in the sensor system. For example, the computer system 20 may control a driving direction, a driving speed, or the like of the vehicle based on data input of the sensor system 12. This is not limited in this application.

The head-up display system 22 may include several elements, for example, a windshield, a controller, and a head-up display shown in the figure. The controller 222 is configured to: generate an image (for example, generate an image including a vehicle status like a vehicle speed and a power/fuel amount, or an image of augmented reality AR content) based on a user instruction, and send the image to the head-up display for display. The head-up display may include a picture generation unit and a reflection mirror combination. The windshield is configured to cooperate with the head-up display to implement a light path of the head-up display system, so that a target image is presented in front of a driver. Functions of some elements in the head-up display system may alternatively be implemented by another subsystem of the vehicle. For example, the controller may alternatively be an element in the control system.

FIG. 10 in this application shows that four subsystems are included. The sensor system 12, the control system 14, the computer system 20, and the head-up display system 22 are merely examples, and do not constitute a limitation. In practice, the vehicle may combine several elements in the vehicle based on different functions, to obtain subsystems with corresponding different functions. In practice, the vehicle may include more or fewer systems or elements. This is not limited in this application.

The vehicle may be a car, a truck, a bus, a boat, an airplane, a helicopter, a recreational vehicle, a playground vehicle, a construction device, a trolley, a golf cart, a train, or the like. This is not specifically limited in embodiments of this application.

FIG. 11 is a functional block diagram of a mobile carrier 1100 according to an embodiment of this application. The mobile carrier 1100 may include a sensing system 120, a display device 130, and a compute platform 150. The sensing system 120 may include one or more types of sensors that sense and measure information about an environment around the mobile carrier 1100. For example, the sensing system 120 may include a positioning system. The positioning system may be a global positioning system (global positioning system, GPS), or may be one or more of a BeiDou system or another positioning system, an inertial measurement unit (inertial measurement unit, IMU), a lidar, a millimeter-wave radar, an ultrasonic radar, and a camera apparatus.

Some or all functions of the mobile carrier 1100 may be controlled by the compute platform 150. The compute platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the compute platform 150 may further include a memory. The memory is configured to store instructions. Some or all of the processors 151 to 15n may invoke the instructions in the memory to execute the instructions, to implement corresponding functions. The display device 130 in the cockpit is a display device applicable to this embodiment of this application, for example, the display device 500, the display device 600, the display device 700, and the display device 800 in the foregoing embodiments.

The mobile carrier in this application may include a vehicle on a road, a vehicle on water, a vehicle in air, an entertainment device, or the like. For example, the mobile carrier may be a vehicle. The vehicle is a vehicle in a broad sense, and may be a vehicle (like a commercial vehicle, a passenger vehicle, or a train), a recreation device, a toy vehicle, or the like. A type of the vehicle is not specifically limited in embodiments of this application. For another example, the mobile carrier may be a vehicle like an airplane or a ship.

Unless otherwise defined, a technical term or a scientific term used herein should have a general meaning understood by a person of ordinary skill in the art of the present disclosure.

The foregoing descriptions are merely embodiments of this application, but are not intended to limit this application. Any modification, equivalent replacement, or improvement made based on this application shall fall within the protection scope of this application.

## Claims

1. A display device, comprising a projection module, a waveguide in-coupling module, an optical waveguide, and a windshield correction element, wherein
the projection module is configured to project image light to the waveguide in-coupling module;
the waveguide in-coupling module is configured to: couple the image light from the projection module into the optical waveguide, and compensate for a chromatic aberration value caused by the windshield correction element;
the optical waveguide is configured to emit the image light from the waveguide in-coupling module to the windshield correction element; and
the windshield correction element is configured to: adjust a transmission angle and/or a transmission direction of the image light from the optical waveguide, and emit the adjusted image light to a windshield.

2. The display device according to claim 1, wherein
the chromatic aberration value Δ*θ*_{*CF*1} caused by the windshield correction element and a chromatic aberration value Δ*θ*_{*CF*2} caused by the waveguide in-coupling module satisfy: $- 3 mrad \leq \left(Δ{θ}_{CF 1}+Δ{θ}_{CF 2}\right) \leq 3 mrad ,$ wherein
Δ*θ*_{*CF*1} represents an angle deviation between C light and F light corresponding to the windshield correction element at a maximum field of view *θ*, Δ*θ*_{*CF*2} represents an angle deviation between the C light and the F light corresponding to the waveguide in-coupling module at the maximum field of view *θ*, a wavelength of the C light is 656 nm, a wavelength of the F light is 486 nm, mrad denotes a unit of measurement milliradian, and signs of Δ*θ*_{*CF*1} and Δ*θ*_{*CF*2} are opposite.

3. The display device according to claim 2, wherein a focal power Φ₁ of the windshield and a focal power Φ₂ of the windshield correction element satisfy: $- 0.5 {m}^{- 1} \leq \left({Φ}_{1}+{Φ}_{2}\right) \leq 0.5 {m}^{- 1} .$

4. The display device according to claim 2 or 3, wherein the chromatic aberration value Δ*θ*_{*CF*1} caused by the windshield correction element and the chromatic aberration value Δ*θ*_{*CF*2} caused by the waveguide in-coupling module satisfy: $\left(Δ{θ}_{CF 1}+Δ{θ}_{CF 2}\right) = 0.3 mrad .$

5. The display device according to claim 3 or 4, wherein the focal power Φ₁ of the windshield and the focal power Φ₂ of the windshield correction element satisfy: $\left({Φ}_{1}+{Φ}_{2}\right) = 0.05 {m}^{- 1} .$

6. The display device according to claim 5, wherein
the windshield correction element is a lens whose surface type is an extend polynomial, and the waveguide in-coupling module comprises a plurality of lenses.

7. The display device according to claim 6, wherein the waveguide in-coupling module comprises a first lens, a second lens, a third lens, a fourth lens, and a fifth lens that are sequentially arranged in the transmission direction of the image light, and the second lens is a doublet lens.

8. The display device according to claim 2 or 3, wherein the chromatic aberration value Δ*θ*_{*CF*1} caused by the windshield correction element and the chromatic aberration value Δ*θ*_{*CF*2} caused by the waveguide in-coupling module satisfy: $\left(Δ{θ}_{CF 1}+Δ{θ}_{CF 2}\right) = - 0.6 mrad .$

9. The display device according to claim 3 or 8, wherein the focal power Φ₁ of the windshield and the focal power Φ₂ of the windshield correction element satisfy: $\left({Φ}_{1}+{Φ}_{2}\right) = 0.13 {m}^{- 1} .$

10. The display device according to claim 9, wherein
the windshield correction element is a Fresnel lens, and the waveguide in-coupling module comprises a plurality of lenses and at least one reflector.

11. The display device according to claim 10, wherein the waveguide in-coupling module comprises a first lens, a second lens, a first reflector, and a second reflector that are sequentially arranged in the transmission direction of the image light, and the first lens is a doublet lens.

12. The display device according to claim 2 or 3, wherein the chromatic aberration value Δ*θ*_{*CF*1} caused by the windshield correction element and the chromatic aberration value Δ*θ*_{*CF*2} caused by the waveguide in-coupling module satisfy: $\left(Δ{θ}_{CF 1}+Δ{θ}_{CF 2}\right) = 1.8 mrad .$

13. The display device according to claim 3 or 12, wherein the focal power Φ₁ of the windshield and the focal power Φ₂ of the windshield correction element satisfy: $\left({Φ}_{1}+{Φ}_{2}\right) = 0.4 {m}^{- 1} .$

14. The display device according to claim 13, wherein
the windshield correction element is a transmissive grating, and the waveguide in-coupling module comprises a plurality of lenses and a reflective grating.

15. The display device according to claim 14, wherein the waveguide in-coupling module comprises a first lens, a second lens, and the reflective grating that are sequentially arranged in the transmission direction of the image light, and the first lens is a doublet lens.

16. The display device according to claim 2 or 3, wherein the chromatic aberration value Δ*θ*_{*CF*1} caused by the windshield correction element and the chromatic aberration value Δ*θ*_{*CF*2} caused by the waveguide in-coupling module satisfy: $\left(Δ{θ}_{CF 1}+Δ{θ}_{CF 2}\right) = - 1.6 mrad .$

17. The display device according to claim 3 or 16, wherein the focal power Φ₁ of the windshield and the focal power Φ₂ of the windshield correction element satisfy: $\left({Φ}_{1}+{Φ}_{2}\right) = - 0.07 {m}^{- 1} .$

18. The display device according to claim 17, wherein
the windshield correction element is a lens whose surface type is an extend polynomial, and the waveguide in-coupling module comprises at least one lens, at least one reflector, and a transmissive grating.

19. The display device according to claim 18, wherein the waveguide in-coupling module comprises a first lens, a first reflector, and the transmissive grating that are sequentially arranged in the transmission direction of the image light.

20. The display device according to any one of claims 1 to 19, wherein
the windshield correction element is further configured to serve as a dust cover of the display device.

21. The display device according to any one of claims 1 to 19, wherein the display device further comprises a dust cover, and the windshield correction element is fixed integrally with the dust cover.

22. A cockpit system, comprising the display device according to any one of claims 1 to 21 and an instrument panel, wherein the display device is mounted in the instrument panel.

23. A vehicle, comprising the windshield and the display device according to any one of claims 1 to 21 or comprising the cockpit system according to claim 22.
